Europäisches Patentamt

European Patent Office

Office européen des brevets

(11) Veröffentlichungsnummer: **0 059 244**
**B1**

(12) # EUROPÄISCHE PATENTSCHRIFT

(45) Veröffentlichungstag der Patentschrift: **25.05.88**

(51) Int. Cl.⁴: **G 01 P 3/489**

(21) Anmeldenummer: **81108731.1**

(22) Anmeldetag: **22.10.81**

(54) **Vorrichtung zur Drehzahlerfassung.**

(30) Priorität: **02.03.81 DE 3107938**

(43) Veröffentlichungstag der Anmeldung:
**08.09.82 Patentblatt 82/36**

(45) Bekanntmachung des Hinweises auf die
Patenterteilung:
**25.05.88 Patentblatt 88/21**

(84) Benannte Vertragsstaaten:
**AT BE CH DE FR GB IT LI SE**

(56) Entgegenhaltungen:
**DE-A-2 046 938**
**US-A-3 757 167**
**US-A-3 829 785**
**US-A-3 882 402**

(73) Patentinhaber: **Siemens Aktiengesellschaft**
**Berlin und München**
**Wittelsbacherplatz 2**
**D-8000 München 2 (DE)**

(72) Erfinder: **Dreiseitl, Walter, Dipl.-Ing.**
**Alterlanger Strasse 23a**
**D-8520 Erlangen (DE)**
Erfinder: **Koch, Manfred**
**Kloster Langheim Strasse 38**
**D-8600 Bamberg (DE)**
Erfinder: **Linden, Wilhelm, Dipl.-Ing.**
**Keuperstrasse 9**
**D-8520 Erlangen-Büchenbach (DE)**

Courier Press, Leamington Spa, England.

**Beschreibung**

Die Erfindung bezieht sich auf eine Vorrichtung zur Drehzahlerfassung einer Drehwelle mit

a) einem digitalen Inkremental-Drehgeber,

—der ein mit dem Drehwinkel der Drehwelle sich annähernd periodisch, wenigstens abschnittweise stetig änderndes Winkelsignal erzeugt, dessen jeweilige Periodenlänge gegeben ist durch die Winkelbereiche zwischen gegeneinander um annähernd gleiche Winkel verdrehten Referenzstellungen der Drehwelle, und dessen momentane Amplitude jeweils dem momentanen Drehwinkel gegenüber einer Referenzstellung entspricht, und

—der jeweils beim Durchgang durch eine Referenzstellung einen Zählimpuls abgibt, und

b) einem die innerhalb eines Meßzeitraumes abgegebenen Zählimpulse zählenden Zählwerk zur Bestimmung der durchlaufenden Winkelbereiche.

Für eine analoge Erfassung der Drehzahl einer Welle, z.B. bei einer drehzahlgeregelten Maschine, wird meist ein Tacho-Dynamogenerator verwendet, dessen Ausgangssignal nur annähernd linear zur Drehzahl und noch von Schwankungen, die z.B. durch die Lamellierung oder Kontaktspannungen an den Kohlen hervorgerufen sind, überlagert ist. Bei niedrigen Drehzahlen überdecken diese Schwankungen den annähernd drehzahlproportionalen Anteil des Ausgangssignals derart, daß eine exakte Drehzahlerfassung nicht möglich ist. Hinzu kommt ein Reversierfehler und eine Langzeitdrift, die z.B. durch den Temperaturgang des Generators auch bei hohen Drehzahlen hervorgerufen wird. .

Für die digitale Drehzahlerfassung sind Inkremental-Drehgeber bekannt, bei denen eine mit der Drehwelle verbundene Impulsscheibe, auf der in äquidistanten Winkelabständen Markierungen angebracht sind, von einer Sonde abgetastet wird. Hierbei kann es sich um magnetische Markierungen und Hall-Sonden oder um optische Markierungen und optische Sensoren handeln. Das Meßsignal dieser Sonden ist in Abhängigkeit vom Drehwinkel zunächst ein periodisches Analogsignal, das stetig zwischen zwei Extremwerten verläuft, wobei der eine Extremwert jeweils einer Referenzstellung entspricht, bei der sich Marke und Sonde gegenüberstehen, während der andere Extremwert einer Referenzstellung entspricht, bei der die Sonde der Mitte zwischen zwei Marken gegenübersteht. Um aus diesem im allgemeinen ungefähr sinusförmig bis dreiecksförmig verlaufenden Analogsignal ein Digitalsignal zu erhalten, brauchen nur mittels eines Grenzwertmelders die Schnittpunkte des Ausgangssignals mit einem festen Bezugssignal ermittelt zu werden. Die Anzahl der Schnittpunkte pro Meßzeitraum entspricht dann der Anzahl der an der Sonde vorbeibewegten Marken, d.h. der Anzahl der Referenzstellungen, die innerhalb des während des Meßzeitraums durchlaufenen Winkelbereichs liegen. Der zurückgelegte Drehwinkel der Drehwelle ergibt sich weitgehend aus dem Produkt dieser Anzahl und dem Winkelabstand, um den die Referenzstellungen der Welle gegeneinander verdreht sind. Bei fest vorgegebener Länge des Meßzeitraumes ist die Drehzahl selbst somit proportional der Anzahl der überstrichenen Winkelstellungen.

Die digitale Drehzahlerfassung ermittelt den durchlaufenen Winkelbereich also nur als ganzzahliges Vielfaches des zwischen den äquidistanten Referenzstellungen liegenden Winkelbereiches. Daher wird bei Vorgabe eines festen Meßzeitraumes nur dann die Drehzahl hinreichend genau ermittelt, wenn in diesem Meßzeitraum genügend viele Durchgänge durch die Referenzstellungen stattfinden. Bei niedrigen Frequenzen ergeben sich somit unzulässig lange Meßzeiten. Man kann aber auch eine Zahl von Durchgängen vorgeben und die dazu benötigte Zeit messen; auch in diesem Fall ergeben sich bei niedrigen Drehzahlen zu lange Meßzeiten. Bei hohen Drehzahlen (sehr kurze Meßzeiten) ergibt sich eine Unsicherheit durch die Zeitmessung. Daher wird häufig die Analogerfassung mit der Digitalerfassung kombiniert, indem mit der Drehwelle sowohl ein Dynamogenerator als auch ein digitaler Drehgeber gekoppelt werden und das Ausgangssignal des digitalen Drehgebers zur Korrektur der analogen Drehzahlerfassung verwendet wird. Dies stellt jedoch einen hohen gerätetechnischen Aufwand dar. Aus mechanischen Gründen und wegen der Betriebssicherheit ist die Verwendung eines Dynamogenerators überhaupt oft unerwünscht. Außerdem ist auch weiterhin keine exakte Erfassung niedriger Drehzahlen möglich. Vielmehr ist die Drehzahl Null, z.B. wie beim Stillstand der Maschine oder bei Umkehrung der Drehrichtung, ein singulärer, auf diese Weise nicht erfaßbarer Betriebszustand.

Aus der US—A—38 29 785 ist das Prinzip bekannt, bei der Messung einer unbekannten Frequenz oder Periode innerhalb eines gegebenen Meßzeitraums das Meßergebnis dadurch zu präzisieren, daß zusätzlich zu den durchlaufenen vollen Meßzyklen die am Beginn und am Ende des Meßzeitraums liegenden unvollständigen Meßzyklen berücksichtigt werden. Die in dieser Druckschrift beschriebene Schaltungsanordnung verwendet zu diesem Zweck elektronische Baueinheiten wie Speicher, Zähler und Rechenwerke.

Der Erfindung liegt die Aufgabe zugrunde, eine Vorrichtung zur Drehzahlerfassung zu schaffen, die mit geringem Aufwand eine hochgenaue Drehzahlmessung insbesondere auch im Bereich kleiner Drehzahlen bis zum Stillstand ermöglicht.

Diese Aufgabe wird gemäß dem vorliegenden Anspruch 1, gelöst. Dabei wird also von einem digitalen Inkremental-Drehgeber der eingangs erwähnten Art ausgegangen, dessen Winkelsignal neben der digitalen Auswertung noch einer zweiten Auswertung unterworfen wird. Gemäß der Erfindung ist an diesem digitalen Drehgeber ein Ausgang für das Winkelsignal sowie ein daran angeschlossener Speicher vorgesehen. Zu Beginn des Meßzeitraumes wird mittels eines einleitenden Impulses an Drehgeber-Ausgang die dem momentanen Drehwinkel entsprechende Amplitude des Winkelsignals abgelesen, die dann bis zum Ende des Meßzeitraumes abgespeichert ist. Auch am Ende des Meßzeitraumes wird, mittels eines den Meßzeitraum beendenden Impulses, am Drehgeber-Ausgang die dem momentanen Drehwinkel entsprechende Amplitude des Winkelsignals abgelesen, und ein Rechenwerk enthält Mittel zur Bildung der Differenz aus den beiden Amplituden. Diese Differenz dient zur Korrektur der vom Zählwerk gezählten Anzahl der durchlaufenen Winkelbereiche. Hierzu enthält das Rechenwerk auch Mittel zur Addition einer der genannten Amplituden-Differenz proportionalen Korrekturgröße zur Anzahl der durchlaufenen Winkelbereiche.

Das Additionsergebnis, also z.B. die Summe aus dem Zählerstand n des Zählwerks und der auf die Maximalamplitude des Winkelsignals normierten Differenz oder die Summe aus dem Produkt $n \cdot U_o$ ($U_o$ = Maximalamplitude des Winkelsignals, entsprechend dem mittleren Abstand $\bar{\phi}$ der Referenzstellungen) und der Differenz selbst, ergibt dann einen genaueren Wert für den im Meßzeitraum durchlaufenen Winkel und bestimmt somit den genaueren Drehzahl-Meßwert.

Als digitale Drehgeber können praktisch alle bekannten digitalen Inkremental-Drehgeber verwendet werden, da in der Regel die verwendeten optischen oder magnetischen Sonden zunächst ein Winkelsignal erzeugen, das annähernd sinusförmig bis dreiecksförmig ist. Jeder Referenzstellungen entspricht dabei ein Nulldurchgang oder ein anderer bestimmter Wert des Winkelsignals, und zur Bildung des digitalen Drehzahlsignals werden während des Meßzeitraumes z.B. die Nulldurchgänge gezählt. Soll eine Umkehrung der Drehrichtung zugelassen und erfaßt werden, so ist es bei diesen Drehgebern üblich, eine zweite Sonde zu verwenden. Die Sonde ist so angebracht, daß ein gegenüber dem ersten Winkelsignal phasenversetztes zweites Winkelsignal erzeugt wird. Dabei ist ein Richtungsdiskriminator vorgesehen, der bei einer Umkehr der Drehrichtung die Durchgänge durch die Referenzstellungen mit entgegengesetztem Vorzeichen zählt.

Wie beim Stand der Technik ermittelt der Drehgeber bei einem vorgegebenen mittleren Abstand der Referenzstellungen dem im Meßzeitraum zurückgelegten Drehwinkel als ein ganzzahliges Vielfaches dieses mittleren Winkelabstandes, ohne Rücksicht auf den jeweils anfangs bis zum Durchlaufen der ersten gezählten Referenzstellung durchlaufenen Winkel und den am Schluß nach der letzten durchlaufenen Referenzstellung noch durchlaufenen Winkel. Gemäß der Erfindung kann nun das vom digitalen Drehgeber ermittelte ganzzahlige Vielfache des mittleren Winkelabstandes der Referenzstellungen durch Addition einer Korrekturgröße ergänzt werden.

Dabei wird ausgenutzt, daß die momentane Amplitude des Winkelsignals ein Maß ist für den Winkelabstand zwischen der augenblicklichen Stellung der Welle und der nächsten Referenzstellung, z.B. der zum Nulldurchgang des Winkelsignals gehörenden Winkelstellung, unabhängig davon, ob diese Referenzstellung im Meßzeitraum überhaupt angenommen wird. Während die digitale Erfassung die Nulldurchgänge des Winkelsignals zeitlich erfaßt, wird zur Bildung der Korrekturgröße die Stellung der Welle zwischen zwei den Nulldurchgängen entsprechenden Winkelstellungen zu Anfang und Ende des Meßzeitraumes winkelmäßig erfaßt. Die Korrekturgröße ergibt sich als Differenz zwischen der Anfangsstellung der Welle und der Endlage. Sind beide Winkelsignale gleich, so ist die Korrekturgröße Null und der durchlaufene Winkelbereich praktisch das vom digitalen Drehzahlgeber gezählte Vielfache des mittleren Winkelabstandes. Liegt jedoch z.B. die Endstellung näher an der letzten durchlaufenen Referenzstellung als die Anfangsstellung, so ist der Winkelbereich entsprechend kleiner als dieses Vielfache. Bildet man demnach z.B. die Differenz der beiden Winkelsignale und normiert sie auf den mittleren Winkelabstand, d.h. dividiert sie durch den mittleren Abstand zwischen den Referenzstellungen, so erhält man einen Bruchteil des mittleren Winkelabstandes, um den die vom digitalen Drehzahlgeber ermittelte Zahl der durchlaufenen Winkelbereiche zu korrigieren ist. Genauso kann aber nach vom Produkt aus der vom digitalen Geber ermittelten Anzahl und dem mittleren Abstand ausgegangen werden, wobei dann als Korrekturgröße die Differenz der beiden Drehwinkel direkt benutzt werden kann. In beiden Fällen wird ein dem im Meßzeitraum durchlaufenen Winkel proportionales Signal erzeugt.

Bei fest vorgegebenem Meßzeitraum ist der durchlaufene Winkel proportional zur Drehzahl. Die Länge des Meßzeitraumes fest vorzugeben, ist jedoch häufig nachteilig, vielmehr soll z.B. für Drehzahlregelungen der Meßzeitraum entsprechend dem erforderlichen Abstand zwischen zwei Drehzahl-Istwert-Erfassungen verändert werden können. In diesem Fall muß zum Übergang auf den Drehzahl-Istwert der durchlaufene Winkel durch die Länge des Zeitintervalles dividiert werden. Vorteilhaft ist ein Zeitsteuerwerk vorgesehen, dem Triggerimpulse für Start und Stop frei eingebbar sind und das die den Meßzeitraum einleitenden und beendenden Impulse abgibt. Das Zeitsteuerwerk enthält vorteilhaft einen Zeitgeber zur Bestimmung der Länge des Meßzeitraumes, und der Rechner einen Dividierer zur Bildung des Quotienten der durch die Korrekturgrößen-Addition entstandenen Größe und der Länge des Meßzeitraumes. Dieser auf den jeweiligen Meßzeitraum bezogene Winkel ist dann von der Länge des Meßzeitraumes unabhängig und der mittleren Drehzahl während des Meßzeitraumes proportional.

Prinzipiell kann das Ausgangssignal zwischen den Referenzstellungen abwechselnd monoton steigen und monoton fallen. Dies ist dann der Fall, wenn der Drehgeber nur eine Sonde mit einem etwa sinusförmigen, dreiecksförmigen oder trapezförmigen Ausgangssignal enthält. Bei hinreichender linearer Steigung ist dann der Drehwinkel zwischen einer momentanen Lage der Drehwelle und der in einer bestimmten Drehrichtung folgenden (oder vorangegangenen) Referenzstellung proportional der Differenz aus dem momentanen Winkelsignal und der Amplitude des Winkelsignals in dieser Referenzstellung, wobei noch durch einen entsprechenden Vorzeichenwechsel zu berücksichtigen ist, ob der momentanen Lage ein steigender oder ein fallender Bereich des Winkelsignals entspricht.

Es ist jedoch vorteilhaft, wenn der Drehgeber mehrere Sonden mit mehreren Ausgangssignalen, die gegeneinander versetzt sind, enthält. Mittels einer Umschalteinrichtung werden diese Signalkurven jeweils so auf den Ausgang für das Winkelsignal geschaltet, daß ein sägezahnartiges Winkelsignal entsteht, das stets innerhalb einer Periode monoton mit dem Drehwinkel steigt. Als Korrekturgröße kann bei einer derart linearisierten Winkelsignalkurve dir Differenz aus dem jeweils am Anfang bzw. Ende des Meßzeitraums gemessenem Winkelsignalen selbst benutzt werden, sofern die Minima und Maxima der Winkelsignalkurve ungefähr konstant sind. Bei einem nichtlinearen Winkelsignal kann vor der Differenzbildung noch eine Linearisierung vorgenommen werden.

Die maximale Amplitude, d.h. der Hub des Winkelsignals zwischen zwei Referenzstellungen und somit die Steigung des Winkelsignals selbst ist proportional zum mittleren Winkel-Abstand der Referenzstellungen. Infolge von Unregelmäßigkeiten der Marken auf den Impulsscheiben, Alterung, Temperaturgang und anderen Einflüssen des Drehgebers sind jedoch die Steigung der Winkelsignalkurve und der Winkelabstand der Referenzstellungen keine Konstanten. Vorteilhaft ist ein zweiter Speicher vorgesehen, in den jeweils der Hub des Winkelsignals zwischen zwei benachbarten Referenzstellungen, d.h. die maximale Winkelsignal-Amplitude, eingelesen und während des Meßzeitraums gespeichert wird, um einen aktuellen Mittelwert für den Winkelabstand zwischen den Referenzstellungen zu bilden. Die auf diesen mittleren Abstand normierte Differenz der ausgelesenen Amplitudenwerte wird somit von diesen Störeinflüssen unabhängig.

Vorteilhaft ist ferner vorgesehen, daß die den Meßzeitraum einleitenden und beendenden Impulse während der Betätigung der Umschalteinrichtung verzögert werden. Umgekehrt ist es auch vorteilhaft, während des Auslesens der Winkelsignale die Betätigung der Umschalteinrichtung zu verzögern. Hierzu kann das bereits erwähnte Zeitsteuerwerk verwendet werden. Dadurch wird bei einer zeitlichen Koinzidenz der Start- und Stop-Befehle mit dem Umschaltvorgang vermieden, daß das Auslesen zu einem Zeitpunkt geschieht, wo durch die Betätigung der Umschalteinrichtung kein definiertes Signal am entsprechenden Winkelsignal-Ausgang anliegt.

Anhand von einem bevorzugten Ausführungsbeispiel und 4 Figuren wird die Erfindung näher erläutert.

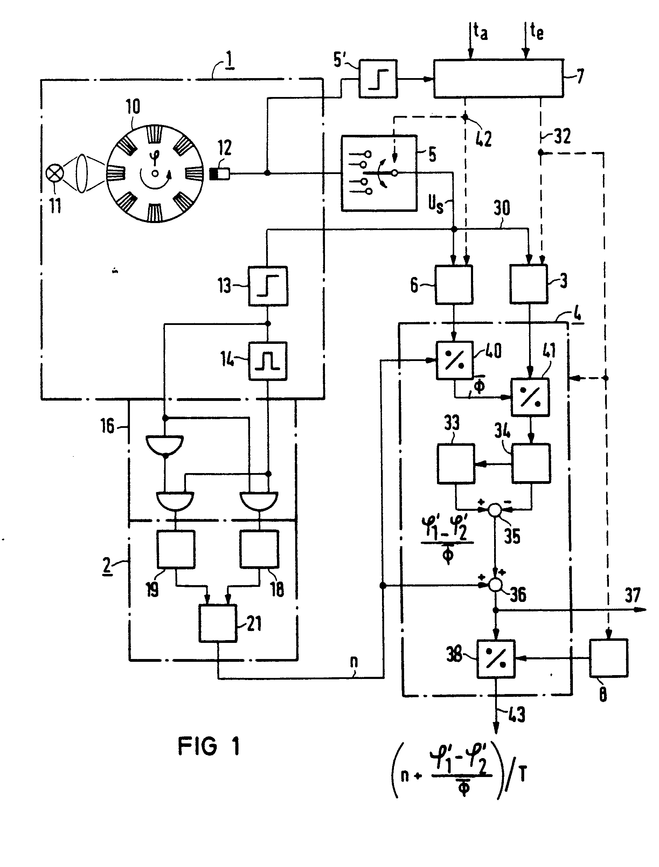

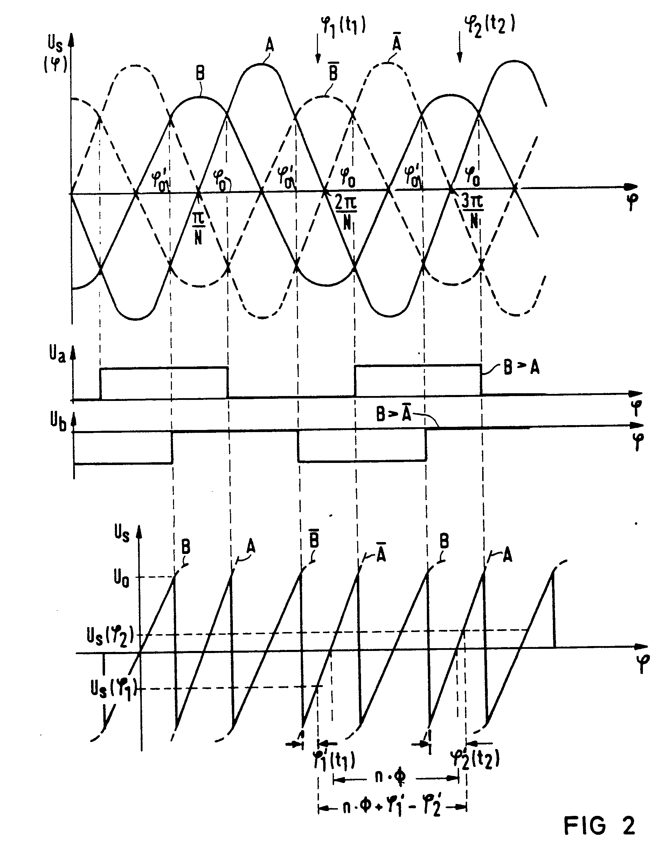

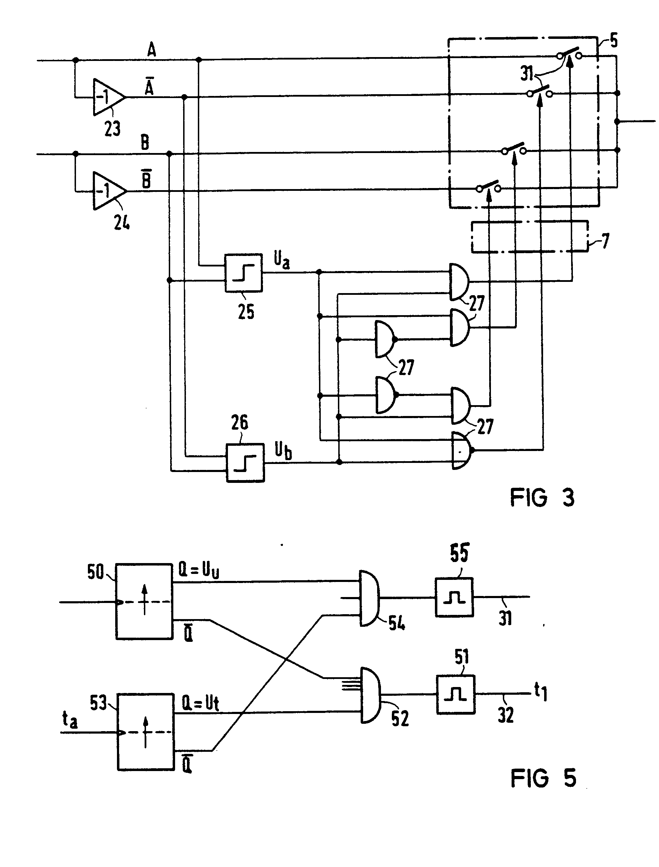

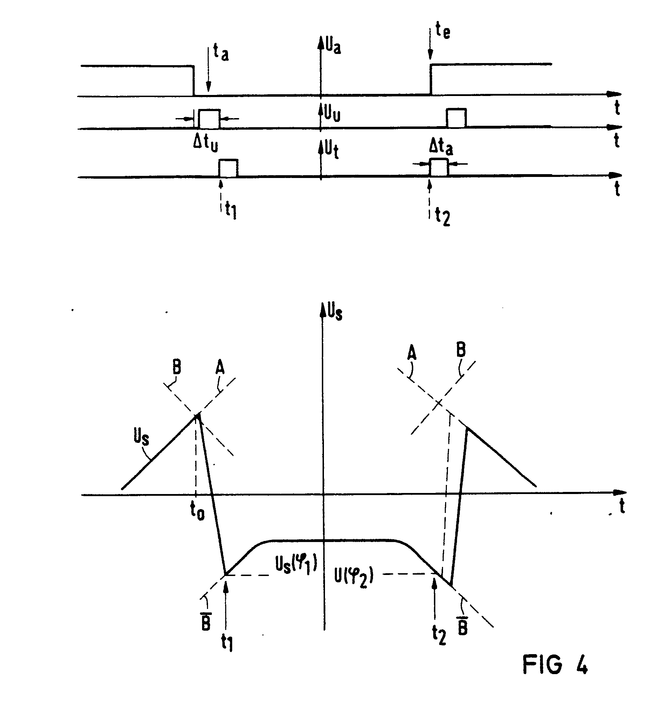

Figur 1 zeigt den Aufbau einer Vorrichtung nach der Erfindung, in Figur 2 sind verschiedene dabei auftretende Signalkurven gezeigt, Figur 3 stellt schematisch eine Umschalteinrichtung bei der Vorrichtung nach Figur 1 dar, Figur 4 zeigt die Signalverläufe bei einem besonders extremen Betriebsfall und Fig. 5 dient zur Erläuterung des verwendeten Zeitsteuerwerkes.

In Figur 1 ist schematisch der digitale Drehgeber 1, das Zählwerk 2, der Speicher 3 für die Anfangs-Amplitude des Winkelsignals, die Rechenstufe 4, eine Umschalteinrichtung 5, ein zweiter Speicher 6, der als Summenspeicher für den im Meßzeitraum jeweils zwischen zwei Referenzstellungen zurückgelegten Hub dient, ein Zeitsteuerwerk 7 sowie ein Zeitgeber 8 dargestellt.

Auf der Welle einer drehzahlgeregelten Maschine ist eine Impulsscheibe 10 befestigt, die in äquidistanten Abständen angeordnete Markierungen trägt, die mittels einer entsprechenden Sondeneinrichtung, z.B. einer Beleuchtungseinrichtung 11 und eines optischen Sensors 12, abgetastet werden. .

Zunächst sei der einfache Fall angenommen, daß nur eine Drehrichtung der Drehwelle möglich ist und erfaßt werden soll. In diesem Fall genügt eine Sondeneinrichtung aus einem einzigen Sensor, dessen Ausgangssignal (Winkelsignal) z.B. eine Fotospannung $U_S$ sein kann. Die Abhängigkeit dieses Winkelsignals von der Stellung der Drehachse (Winkel $\varphi$) kann z.B. etwa sinusförmig entsprechend der Kurve A in Figur 2 sein. Sind längs des Umfangs der Impulsscheibe N Marken angeordnet, so nimmt der periodische Kurvenverlauf A jeweils nach $2\pi/N$ gleiche Werte an. Die bei $\pi/N$, $2\pi/N$ gezeigten Nulldurchgänge treten jeweils dann auf, wenn die Drehscheibe 10 mit ihren Markierungen so im Strahlengang zwischen Beleuchtungseinrichtung 11 und Sensor 12 steht, daß der Sensor halbe Lichtintensität erhält. Diese Stellungen können beispielsweise als die Referenzstellungen benutzt werden. Es muß dann nach dem Stand der Technik nur durch eine Grenzwert-Meldeschaltung 13 jeweils der Nulldurchgang der Kurve A erfaßt und über einen Impulsbildner 14 dem Zählwerk 2 zugeführt werden. Befindet sich im dargestellten Beispiel die Impulsscheibe 10 z.B. zu Beginn (Zeitpunkt $t_1$) de Meßzeitraumes T in der Stellung $\varphi_1$ kurz vor einem Nulldurchgang und am Ende (Zeitpunkt $t_2$) des Meßzeitraumes in der Winkelstellung $\varphi_2$ kurz nach einem Nulldurchgang, so ist während des Meßzeitraumes T insgesamt ein Winkel überstrichen worden, der etwas über $\pi/N$ beträgt, entsprechend einer etwas über $1/(2NT)$ liegenden Drehzahl. Die im Zählwerk gespeicherte Anzahl n der Referenzstellungen beträgt in diesem Fall jedoch n=2, entsprechend einem Winkel von $2\pi/N$ oder einer Drehzahl $1/(NT)$. Die digitale Drehzahlerfassung selbst ist somit zunächst ungenau.

Um auch eine umgekehrte Drehrichtung erfassen zu können, wird nach dem Stand der Technik eine Sensoreinrichtung mit zwei Sensoren verwendet, die derart an der Impulsscheibe angeordnet sind, daß ein zweites, in Figur 2 mit B bezeichnetes, gegenüber A um 90° phasenverschobenes Signal erzeugt wird. Dabei liegt eine positive Drehrichtung vor, wenn sich der Drehwinkel $\varphi$ nach Figur 2 von links nach rechts fortschreitend ändert. Eine positive Flanke des Grenzwert-Meldesignals koinzidiert dann stets mit positiven Werten von B, während bei Umkehrung der Drehrichtung die Kurven A und B in Figur 2 von rechts nach links durchlaufen werden, wobei eine positive Flanke des Grenzwertmeldesignals mit negativen Werten von B koinzidiert. Zur Erfassung der Drehrichtung kann daher ein Richtungsdiskriminator 16 verwendet werden. Diese Richtungsdiskriminierung ist z.B. in "Die numerische Steuerung von Werkzeugmaschinen", Carl Hanser Verlag, München 1971, S. 13, beschrieben. Bei jeder in positiver Drehrichtung durchlaufenen Referenzstellung wird dann ein entsprechendes Impulssignal einem Zähler 18 für die positive Drehrichtung, bei jeder in negativer Richtung durchlaufenen Referenzstellung einem Zähler 19 für die negative Drehrichtung zugeführt. Die beiden Zählerstände 18 und 19 werden am Ende des Meßzeitraumes in einem Additionsglied 21 mit unterschiedlichen Vorzeichen addiert und bilden somit ein digitales Signal n, das bei konstanter Länge T des Meßzeitraumes der Drehzahl ungefähr proportional ist.

Eine feinere digitale Drehzahlerfassung erhält man, wenn zwischen den Schnittpunkten $\varphi_0$ der Kurven A und B (Referenzstellungen mit Drehwinkeln $\varphi_0$) weitere Referenzstellungen $\varphi'_0$ definiert werden. Dies wird beim bevorzugten Ausführungsbeispiel dadurch erreicht, daß neben den Kurven A und B die entsprechenden invertierten Kurven $\bar{A}$, $\bar{B}$ und deren Schnittpunkte mit den Kurven A, B gebildet werden (Inversion-Glieder 23, 24 in Figur 3). Eine Grenzwert-Meldeschaltung (Fig. 1: Element 5' bzw. Fig. 3: Grenzwertmelder 25, 26) bildet Winkelbereiche, in denen B>A, bzw. B>$\bar{A}$ gilt, die durch die Signale $U_a$ and $U_b$ angegeben sind. Über weitere AND-, NAND- bzw. NOR-Gatter 27 können dann Schaltsignale gebildet werden, die über entsprechende Schalter 31 der Umschaltvorrichtung 5 jeweils den um einen Nulldurchgang liegenden ansteigenden Ast der Kurven A, $\bar{A}$, B und $\bar{B}$ auf den Winkelsignal-Ausgang 20 aufschalten. Es entsteht dadurch die in Figure 2 angegebene sägezahn-artige Kurve $U_s$ für das Winkelsignal. Die Ansteuerung der Schalter 31 über die Leitung 42 erfolgt dabei nicht unmittelbar, sondern, wie in Figur 3 angedeutet ist, über das noch zu erläuternde Zeitsteuerwerk 7.

Diese Schaltung arbeitet demnach mit der doppelten Anzahl von Referenzstellungen (mittlerer Abstand 2π/4N), was einer digitalen Interpolation mit der Schrittweite 0,5 gegenüber der einfacheren Ausführung entspricht. Diese Verbesserung ist aber vor allem zur genauen Erfassung niederer Drehzahlen nicht ausreichend.

Vielmehr wird zur Verbesserung der Drehzahlerfassung gemäß der Erfindung über einen Ausgang 30 das Winkelsignal des digitalen Drehgebers herausgeführt.

Das nunmehr am Ausgang der Umschalteinrichtung 5 anliegende, etwa sägezahnförmige Signal $U_s$ besitzt am Anfang und am Ende des Meßzeitraumes die Amplituden $U_s(\varphi_1)$ bzw. $U_s(\varphi_2)$, die direkt als Maß für die relativen Winkelstellungen $\varphi'_1$, $\varphi'_2$ zu Beginn und Ende des Meßzeitraumes benutzt werden können. Wird der mittlere Abstand zwischen den Referenzstellungen mit $\bar{\varphi}$ bezeichnet, so ergibt sich, wie aus Figur 2 unmittelbar ersichtlich ist, für den gesamten innerhalb des Meßzeitraumes überstrichenen Winkel $\Delta\varphi$ die wesentlich genauere Beziehung

$$\Delta\varphi = n \cdot \bar{\varphi} + \varphi'_1 - \varphi'_2 = (n + \frac{\varphi'_1 - \varphi'_2}{\bar{\varphi}}) \cdot \bar{\varphi}$$

Die zunächst ermittelte digitale Drehzahl n muß also um einen Korrekturwert

$$(\varphi'_1 - \varphi'_2)/\bar{\varphi},$$

bzw. bei Linearität von $U_s(\varphi)$ und bekannter Maximalamplitude $U_o$:

$$U_s(\varphi_1) - U_s(\varphi_2)/(2 \cdot U_o)$$

korrigiert werden.

Im einzelnen geschieht diese Korrektur dadurch, daß der Eingang 30 des Speichers 3 an den Ausgang der Umschalteinrichtung 5 gelegt und über eine Ansteuerleitung 32 zu Beginn des Meßzeitraumes (Zeitpunkt $t_1$) zum Abspeichern der momentanen Amplitude $U_s(\varphi_1)$ freigegeben ist. Aus diesem Speicher 3 kann $U_s(\varphi_1)$ am Ende des Meßzeitraumes von Rechner 4 übernommen sind z.B. in den Rechenspeicher 33 eingelesen werden. In den Speicher 3 kann nun die am Ende des Meßzeitraumes (Zeitpunkt $t_2$) vorliegende Amplitude $U_s(\varphi_2)$ als Anfangswert für die nächste Meßperiode eingelesen werden kann; $U_s(\varphi_2)$ wird auch in das Rechenwerk 34 des Rechners 4 eingelesen. Die am Subtraktionsglied 35 gebildete Differenz

$$U_s(\varphi_1) - U_s(\varphi_2)$$

kann, falls sie bereits auf den mittleren Spannungshub des Sägezahns $U_s$ normiert ist, an einem Additionsglied 36 zu dem Ausgangssignal n des digitalen Drehgebers addiert werden. Die durch diese Korrektur erhaltene Größe kann direkt als Maß für den im Meßzeitraum zurückgelegten Drehwinkel $\Delta\varphi$ an einem Ausgang 37 abgegriffen werden. Sofern die Länge des Meßzeitraumes T konstant ist, ist dadurch auch ein Maß für die Drehzahl erhalten.

Wie bereits erwähnt wurde, ist es jedoch vorteilhaft, die Länge des Meßzeitraumes den jeweiligen Erfordernissen anzupassen. Hierzu ist das am Additionsglied 36 erhaltene korrigierte Signal durch die Länge des Meßzeitraumes zu dividieren (Dividierer 38). Diese Länge T wird ihrerseits von einem Zeitgeber 8 geliefert, z.B. dem am Ende des Meßzeitraumes vorhandenen Zählerstand eines mit Beginn des Meßzeitraumes gesetzten Zählers für Zählimpulse konstanter Frequenz. Setzen und Auslesen dieses Zählers 8 wird über die Leitung 32 ebenfalls vom Zeitsteuerwerk 7 gesteuert.

Die zur Bildung der Kurven A, B verwendeten Sonden können z.B. aufgrund ungenauer Justierung etwas unterschiedliche Signalverläufe liefern, wie es in Figur 2 stark übertrieben gezeigt ist. Folge davon ist eine Schwankung der Maximalamplituden der Sägezahnspannung $U_s$, die außerdem in der Regel von einem Temperaturgang und Alterung beeinflußt wird. Daher ist es vorteilhaft, die dem mittleren Abstand $\overline{\phi}$ entsprechende Maximalamplitude $U_o$ von $U_s$ während des Meßzeitraumes jeweils zu bestimmen und zur Normierung der Differenz

$$\phi'_1 - \phi'_2 \text{ bzw. } U_s(\phi_1) - U_s(\phi_2)$$

zu benutzen. Dies kann dadurch geschehen, daß bei jeder Betätigung der Umschalteinrichtung 5 der Amplitudenwert des Winkelsignals ausgelesen und im Zähler 6 addiert wird. Beim Ende des Meßzeitraumes kann dieser Wert ausgelesen und im Dividierglied 40 zur Mittelwertbildung durch das Digitalsignal n dividiert werden. Für n=0, d.h. in der Nähe des Stillstandes, können die im vorangegangenen Meßzeitraum ermittelten Werte für n und den Speicherinhalt 6 verwendet werden. Der Dividierer 41 dient zur Normierung der Amplituden $U_s(\phi_1)$ und $U_s(\phi_2)$.

Bei dieser Vorrichtung wird jeweils zu Beginn eines Meßzeitraumes das Zählwerk 2 und der Zeitgeber 8 gesetzt sowie der Speichereingang 3 geöffnet. Während des Meßzeitraumes werden, ausgelöst durch die Signale der Grenzwert-Meldeschaltung 5', die Umschalteinrichtung 5 und der Speicher 6 betätigt, und am Ende des Meßzeitraumes werden die Speicher ausgelesen und die Rechenstufe 4 angesteuert. Für diese Zeitsteuerung ist ein Zeitsteuerwerk 7 vorgesehen, dessen Funktionen anhand von Figur 4 erläutert werden soll.

In Figur 4 ist gleichzeitig der Grenzfall dargestellt, daß während des Meßzeitraumes die Drehwelle bei einer Umkehr der Drehrichtung vorübergehend stillsteht.

Zunächst sei eine konstante positive Drehrichtung angenommen. Das Winkelsignal folgt dabei dem linearen Teil der Kurve A bis zum Schnittpunkt (Zeitpunkt $t_0$) der Kurve A mit der Kurve B. Dadurch ändert sich auf die im Zusammenhang mit Figur 2 bereits erläuterte Weise der Zustand des Signals $U_a$. Daher wird $U_s$ von der Kurve A auf die Kurve $\overline{B}$ umgeschaltet. Dieser Vorgang erfolgt nicht plötzlich, vielmehr ist die Umschaltung erst nach einer gewissen Zeit $\Delta t_u$ abgeschlossen. Es sei nun der ungünstigste Fall angenommen, daß der Zeitpunkt $t_a$, zu dem der Startbefehl zur Einleitung des Meßvorganges gegeben wird, gerade in den Umschaltvorgang fällt, so daß zum Zeitpunkt $t_a$ kein definiertes Winkelsignal vorliegt. Es ist nun vorgesehen, mit einem entsprechenden Triggerimpulse (Zeitpunkt $t_a$) den Beginn (Start) des Meßzeitraumes nicht direkt festzulegen, sondern vielmehr diesen Impuls zunächst dem Zeitsteuerwerk 7 einzugeben. Dort wird dieser Triggerimpuls zunächst gespeichert und erst nach Beendigung des Umschaltvorgangs verarbeitet. Dies kann z.B. dadurch geschehen, daß die von der Umschalteinrichtung 14 gebildeten Impulse jeweils ein entsprechendes Zeitglied im Zeitsteuerwerk 7 zur Verzögerung des einleitenden Impulses anstoßen. In Figur 4 ist mit $U_u$ das Ausgangssignal des Verzögerungsgliedes bezeichnet, mit dem der Start-Triggerimpuls-Eingang für die Dauer $\Delta t_u$ der Umschaltzeit gesperrt ist.

Anhand von Fig. 5 sei das Prinzip eines Zeitsteuerwerkes 7 erläutert. Mit dem Umschaltimpuls (Flanke des Signals $U_a$) für einen der Schalter 31 wird zunächst jeweils ein als Verzögerungsglied dienendes Zeitglied 50 (Ausgangssignal $U_u$) angestoßen, wobei diese Zeitglieder für eine Dauer $\Delta t$ ein einem Impulsbildner zur Bildung des einleitenden Impulses (Zeitpunkt $t_1$) vorgeschaltetes Gatter 52 sperren, so daß der Startimpuls, der zunächst ein dem Gatter 52 vorgeschaltetes weiteres Verzögerungsglied 53 anstößt, gespeichert ist. Somit kann erst nach Ablauf der Umschaltzeit ein Impuls zur Ansteuerung des Zeitgebers 8 und des Speichers 3 abgegeben werden.

Ebenso wird auch der Umschaltimpuls im Zeitglied 50 verzögert, wenn während des Auslesens von der Grenzwert-Meldeschaltung 5' (Signalverlauf $U_a$) eine Umschaltung ausgelöst wurde.

Dazu ist dem Zeitglied 50 ein Gatter 54 mit einem Impulsbildner 55 nachgeordnet, wobei das Gatter 54 für die vom Zeitglied 53 (Ausgangssignal $U_t$) bestimmte Auslesezeit gesperrt bleibt.

Das Gatter 54 wird auf analoge Weise auch während des Auslesens (Zeitpunkt $t_2$) der End-Amplitude $U_s(\phi_2)$ gesperrt, indem ihm auch das entsprechende Ausgangssignal eines nicht dargestellten Zeitgliedes aufgeschaltet ist, wobei dieses weitere Zeitglied vom Stop-Triggerimpuls (Zeitpunkt $t_e$) angestoßen wird. Diesem Zeitglied sind ebenfalls ein Gatter und ein Impulsbildner nachgeschaltet, damit auch die Abgabe des End-Impulses verzögert werden kann, falls der Stop-Triggerimpuls in einen Umschaltvorgang fällt. Dieser Fall ist in Fig. 4 dargestellt, wobei zusätzlich angenommen sei, daß die Drehrichtung geändert und die Drehwelle zum Zeitpunkt t=0 vorübergehend im Stillstand ist.

Nach Drehrichtungswechsel folgt das Winkelsignal der Kurve $\overline{B}$ aus Fig. 2, und zum Zeitpunkt $t_e$ ergeht der Stopimpuls, der in diesem Fall mit dem Impuls $t_2$ zur Beendigung des Meßzeitraumes zusammenfällt. Während des Auslesens (Dauer $\Delta t_a$) meldet die Grenzwert-Meldeschaltung (Komparator) 5' den Kurvenschnittpunkt von A und B, jedoch wird jetzt die Umschaltung des Winkelsignals $U_s$ von der Kurve $\overline{B}$ auf A bis zum Ende des Auslesens verzögert.

Wie aus Figur 4 ersichtlich ist, wird zu den Zeitpunkten $t_1$ und $t_2$ praktisch das jeweils gleiche Winkelsignal

$$U_s(\phi_1) = U_s(\phi_2),$$

d.h. die Korrekturgröße Null, erzeugt. Da ferner im Meßzeitraum kein Referenzstellungsdurchgang stattgefunden hat, ist auch n=0, so daß am Ausgang 37 für den zurückgelegten Winkel der Wert Null und am Ausgang 43 des Dividiergliedes 38 für die Drehzahl ebenfalls der Wert Null ansteht.

Die Erfindung ermöglicht somit nicht nur eine genauere Drehzahlerfassung, wobei störende Einflüsse wie z.B. der Temperaturgang und Alterung der Sensoren weitgehend ausgemittelt werden, sondern die Drehzahl Null ist kein singulärer Wert, und es kann auch der Stillstand exakt erfaßt werden.

**Patentansprüche**

1. Vorrichtung zur Drehzahlerfassung einer Drehwelle, mit

a) einem digitalen Inkremental-Drehgeber (1),

—der ein mit dem Drehwinkel der Drehwelle sich annähernd periodisch, wenigstens abschnittweise stetig änderndes Winkelsignal ($U_s$) erzeugt, dessen jeweilige Periodenlänge ($\phi$) gegeben ist durch die Winkelbereiche zwischen gegeneinander um annähernd gleiche Winkel verdrehten Referenzstellungen ($\phi_0$, $\phi_0'$) der Drehwelle und dessen momentane Amplitude jeweils dem momentanen Drehwinkel gegenüber einer Referenzstellung entspricht, und

—der jeweils beim Durchgang durch eine Referenzstellung einen Zählimpuls abgibt, und

b) einem die innerhalb eines Meßzeitraumes abgegebenen Zählimpulse zählenden Zählwerk (2) zur Bestimmung der durchlaufenen Winkelbereiche, gekennzeichnet durch

c) einen Drehgeber-Ausgang (30) für das Winkelsignal ($U_s$),

d) einen daran angeschlossenen Speicher (3), in dem die zu Beginn ($t_1$) des Meßzeitraumes mittels eines einleitenden Impulses am das Winkelsignal ($U_s$) führenden Drehgeber-Ausgang (30) abgelesene, dem momentanen Drehwinkel ($\phi'(t_1)$) entsprechende Amplitude ($U_s(\phi_1)$) des Winkelsignals ($U_s$) bis zum Ende des Meßzeitraumes abgespeichert ist und

e) ein an den Speicher (3) angeschlossenes Rechenwerk (4, 6) mit

—Mitteln, um am Ende ($t_2$) des Meßzeitraumes mittels eines Endimpulses die dem momentanen Drehwinkel ($\phi'(t_2)$) entsprechende Amplitude ($U_s(\phi_2)$) des Winkelsignals ($U_s$) abzulesen, und

—Mitteln zur Bildung der auf die Maximalamplitude ($U_o$) des Winkelsignals ($U_s$) normierten Differenz der beiden abgelesenen Amplituden ($U_s(\phi_1)$, $U_s(\phi_2)$) oder der auf diese Maximalamplitude ($U_o$) normierten Differenz der entsprechenden momentanen Drehwinkel als Korrekturgröße und zur Addition der Korrekturgröße und der Zahl (n) der durchlaufenen Winkelbereiche, oder

—Mitteln zur Bildung der Differenz der beiden abgelesenen Amplituden ($U_s(\phi_1)$, $U_s(\phi_2)$) oder der entsprechenden momentanen Drehwinkel als Korrekturgröße und zur Addition der Korrekturgröße zum Produkt aus der Zahl (n) der durchlaufenen Winkelbereiche und einem dem mittleren Winkelabstand ($\overline{\phi}$) der Referenzstellungen entsprechenden Winkelsignal,

—wobei das Additionsergebnis als Drehzahl-Meßwert abgegriffen ist.

2. Vorrichtung nach Anspruch 1, dadurch gekennzeichnet, daß der digitale Inkremental-Drehgeber (1) wenigstens zwei gegeneinander phasenverschobene Signalkurven (A, B) erzeugt und dem Zählwerk (2) ein Richtungsdiskriminator (16) vorgeschaltet ist, so daß bei einer Umkehr der Drehrichtung die in umgekehrter Richtung durchlaufenen Winkelbereiche mit entgegengesetztem Vorzeichen gezählt werden.

3. Vorrichtung nach Anspruch 1 oder 2, dadurch gekennzeichnet, daß der digitale Inkremental-Drehgeber (1) jeweils gegeneinander phasenversetzte ungefähr sinus-, dreiecks- oder trapezförmige Signalkurven (A, B, $\overline{A}$, $\overline{B}$) erzeugt und eine Umschalteinrichtung (5, 5') enthält, die durch Aufschalten von annähernd linearen Abschnitten der Signalkurven auf den Drehgeber-Ausgang (30) ein annähernd sägezahnförmiges Winkelsignal ($U_s$) erzeugt.

4. Vorrichtung nach einem der Ansprüche 1 bis 3, gekennzeichnet durch ein Zeitsteuerwerk (7), dem zum Festlegen des Meßzeitraums ($t_a$, $t_e$) Triggerimpulse für Start und Stop eingebbar sind und das die den Meßzeitraum einleitenden und beendenden Impulse abgibt.

5. Vorrichtung nach Anspruch 4, dadurch gekennzeichnet, daß das Zeitsteuerwerk (7) bei einem während der Betätigung der Umschalteinrichtung (5) eingegebenen Triggerimpuls den einleitenden bzw. beendenden Impuls bis zum Ende der Umschaltung verzögert.

6. Vorrichtung nach Anspruch 4 oder 5, dadurch gekennzeichnet, daß das Zeitsteuerwerk (7) einen von dem einleitenden und dem beendenden Impuls angesteuerten Zeitgeber zur Bestimmung der Länge (T) des Meßzeitraumes enthält und daß im Rechenwerk (4) ein Dividierer (38) vorgesehen ist zur Bildung des Quotienten aus dem korrigierten Signal des digitalen Inkremental-Drehgebers (1) und der Länge (T) des Meßzeitraums.

7. Vorrichtung nach einem der Ansprüche 3 bis 6, dadurch gekennzeichnet, daß während des Meßzeitraumes jeweils beim Betätigen der Umschalteinrichtung (5) die maximalen Sägezahnamplituden ($U_o$) gemessen und zur Bildung des mittleren Winkelabstandes ($\overline{\phi}$) der Referenzstellungen einem weiteren Speicher (6) zugeführt werden und daß die zu Beginn und Ende des Meßzeitraumes abgelesenen Amplituden oder deren Differenz in einem weiteren Dividierer (41) durch diesen mittleren Winkelabstand dividiert werden.

8. Vorrichtung nach einem der Ansprüche 1 bis 6, dadurch gekennzeichnet, daß ein Ausgang (37) für die korrigierte Zahl der zurückgelegten Winkelschritte als Meßwert für den zurückgelegten Drehwinkel vorgesehen ist.

**Revendications**

1. Dispositif pour la saisie de la vitesse de rotation d'un arbre tournant, avec

a) un résolveur numérique incrémentiel (1),

—qui produit un signal angulaire ($U_s$) qui change en permanence à peu près périodiquement, au moins par section, avec l'angle en rotation de l'arbre tournant, et dont la longueur de la période ($\phi$) est donnée par les plages angulaires entre des positions de référence ($\phi_0$, $\phi_0'$) de l'arbre tournant décalées entre elles à peu près d'angles égaux, et dont l'amplitude instantanée correspond à l'angle de rotation instantané par rapport à une position de référence; et

—qui émet, au passage par une position de référence, une impulsion de comptage; et

b) une unité de comptage (2) qui compte les impulsions de comptage émises pendant un intervalle de temps de mesure, en vue de déterminer la plage angulaire traversée, caractérisé par

c) une sortie (30) du résolveur pour le signal angulaire ($U_s$);

d) une mémoire (3) qui y est reliée, dans laquelle on mémorise jusqu'à la fin de l'intervalle de temps de mesure, l'amplitude ($U_s(\phi_1)$) du signal angulaire ($U_s$) qui est lue, au début ($t_1$) de l'intervalle de temps de mesure, et avec une impulsion d'initiation à la sortie (30) du résolveur au niveau de laquelle est présent le signal angulaire ($U_s$), et qui correspond à l'angle de rotation instantanée ($\phi'(t_1)$);

e) une unité de calcul (4, 6) reliée à la mémoire, et comportant

—des moyens pour lire, à la fin ($t_2$) de l'intervalle de temps de mesure, à l'aide d'une impulsion de fin, l'amplitude ($U_s(\phi_2)$) du signal angulaire, qui correspond à l'angle de rotation instantané ($\phi'(t_2)$); et

—des moyens pour former la différence, normalisée par rapport à l'amplitude maximale ($U_o$) du signal angulaire ($U_s$), entre les deux amplitudes lues ($U_s(\phi_1)$, $U_s(\phi_2)$), ou la différence, normalisée par rapport à cette amplitude maximale ($U_o$), des angles de rotation instantanés correspondants, en tant que grandeur de correction, et pour additionner la grandeur de correction et le nombre (n) des plages angulaires traversées; ou

—des moyens pour former la différence entre les deux amplitudes lues ($U_s(\phi_1)$, $U_s(\phi_2)$) ou entre les angles de rotation instantanés correspondants, en tant que grandeur de correction, et pour additionner la grandeur de correction au produit formé par le nombre (n) des plages angulaires traversées et par le signal angulaire qui correspond à l'écart angulaire moyen ($\overline{\phi}$) des positions de référence;

—le résultat de l'addition étant prélevé en tant que valeur de mesure de la vitesse de rotation.

2. Dispositif selon la revendication 1, caractérisé par le fait que le résolveur numérique incrémentiel (1) produit au moins deux courbes de signaux (A, B), décalées en phase entre elles, et qu'en amont de l'unité de comptage est prévu un discriminateur de sens (16), en sorte que lors d'une inversion du sens de rotation, les plages angulaires qui sont traversées dans le sens inverse soient comptées avec le signe opposé.

3. Dispositif selon la revendication 1, caractérisé par le fait que le résolveur numérique incrémentiel (1) produit des courbes de signaux (A, B, $\overline{A}$, $\overline{B}$) de forme à peu près sinusoïdale, triangulaire ou trapézoïdale, déphasées entre elles, et comporte un dispositif de commutation (5, 5') qui, lorsqu'il reçoit des sections à peu près linéaires des courbes de signaux, produit au niveau de la sortie (30) du résolveur un signal angulaire ($U_s$) à peu près en dents de scie.

4. Dispositif selon l'une des revendications 1 à 3, caractérisé par une unité de synchronisation (7) dans laquelle on peut introduire, pour déterminer l'intervalle de temps de mesure ($t_a$, $t_e$), des impulsions de déclenchement pour le démarrage et l'arrêt, et qui fournit les impulsions qui déclenchent et font cesser l'intervalle de temps de mesure.

5. Dispositif selon la revendication 4, caractérisé par le fait que l'unité de synchronisation (7) retarde, lors de l'introduction, pendant la commande du dispositif de commutation (5), d'une impulsion de déclenchement, impulsion qui déclenche et fait cesser l'intervalle de temps de mesure, jusqu'à la fin de la commutation.

6. Dispositif selon la revendication 4 ou 5, caractérisé par le fait que l'unité de synchronisation comporte une minuterie commandée par l'impulsion de déclenchement et de cessation de l'intervalle de temps de mesure, pour déterminer la longueur (T) de l'intervalle de temps de mesure, et qu'il est prévu dans l'unité de calcul (4) un diviseur (38) pour former le quotient entre le signal corrigé du résolveur numérique incrémentiel (1) et la longueur (T) de l'intervalle de temps de mesure.

7. Dispositif selon l'une des revendications 3 à 6, caractérisé par le fait que pendant l'intervalle de mesure et à chaque commande de dispositif de commutation (5), on mesure les amplitudes maximales ($U_o$) en dents de scie et on les applique à une seconde mémoire (6) pour la formation de l'écart angulaire moyen ($\overline{\phi}$) des positions de référence, et que les amplitudes ou leur différence mesurées au début et à la fin de l'intervalle de temps de mesure sont divisées dans un second diviseur (41) par ledit écart angulaire moyen.

8. Dispositif selon l'une des revendications 1 à 6, caractérisé par le fait qu'il est prévu une sortie (37) pour le nombre corrigé des pas angulaires effectués, en tant que valeur de mesure par l'angle de rotation parcouru.

**Claims**

1. Device for speed determination of a rotating shaft with

a) a digital incremental rotary position transducer (1),

—which produces an angular signal ($U_s$) constantly changing with the angle of rotation of the rotating shaft, almost periodically and at least in stages, the respective period length ($\phi$) of which is given by the angular ranges between reference positions ($\phi_0$, $\phi_0'$) of the rotating shaft, angularly displaced in respect of each other by approximately the same angles, and whose instantane-

ous amplitude corresponds respectively to the instantaneous angle of rotation in respect of a reference position, and

—which respectively generates a counting pulse when a reference position is traversed and

b) a counter (2) counting the counting pulses generated within a measuring period to determine the angular ranges traversed, characterised by

c) a rotary position transducer output (30) for the angular signal $(U_s)$,

d) a memory (3) connected thereto in which the amplitude $(U_s(\varphi_1))$ of the angular signal $(U_s)$ which is read off at the beginning $(t_1)$ of the measuring period by means of an introductory pulse at the rotary position transducer output (30) conducting the angular signal $(U_s)$ and which corresponds to the instantaneous angle of rotation $(\varphi'(t_1))$ is stored until the end of the measuring period, and

e) an evaluation unit (4, 6) connected to the memory (3) with

—means to read off at the end $(t_2)$ of the measuring period, by means of a final pulse, the amplitude $(U_s(\varphi_2))$ of the angular signal $(U_s)$ corresponding to the instantaneous angle of rotation $(\varphi'(t_2))$ and

—means to form the difference, normalized to the maximum amplitude $(U_o)$ of the angular signal $(U_s)$, of the two amplitudes $(U_s(\varphi_1), U_s(\varphi_2))$ read off or the difference, normalized to this maximum amplitude $(U_o)$, of the corresponding instantaneous angles of rotation as a correction value and to add the correction value and the number (n) of the angular ranges traversed, or

means to form the difference of the two amplitudes $(U_s(\varphi_1), U_s(\varphi_2))$ read off or the corresponding instantaneous angles of rotation as a correction value and to add the correction value to the product from the number (n) of the angular ranges traversed and an angular signal corresponding to the mean angular distance $(\overline{\phi})$ of the reference positions, the addition result being read as a speed measurement value.

2. Device according to claim 1, characterised in that the digital incremental rotary position transducer (1) produces at least two signal curves (A, B) phase-shifted with respect to one another, and a direction discriminator (16) is connected in series to the counter (2) so that when the direction of rotation is reversed, the angular ranges traversed in the reversed direction are counted with opposing signs.

3. Device according to claim 1 or 2, characterised in that the digital incremental rotary position transducer (1) produces approximately sinusoidal, triangular or trapezoidal signal curves (A, B, $\overline{A}$, $\overline{B}$) which are phase-shifted with respect to one another in each case, and contains a reversing device (5, 5') which produces an approximately saw-tooth shaped angular signal $(U_s)$ by superimposition of approximately linear sections of the signal curves onto the rotary position transducer output (30).

4. Device according to one of the claims 1 to 3, characterised by a time control system (7), into which trigger pulses for starting and stopping can be input to determine the measuring period $(t_a, t_e)$ and which generates the pulses introducing and ending the measuring period.

5. Device according to claim 4, characterised in that the time control system (7), in the event of a trigger pulse input during actuation of the reversing device (5), delays the introductory or terminating pulse until the end of the reversing.

6. Device according to claim 4 or 5, characterised in that the time control system (7) contains a timer controlled by the introductory and the terminating pulse for determining the length (T) of the measuring period and that in the evaluation unit (4) there is provided a divider (38) for forming the quotient from the corrected signal of the digital incremental rotary position transducer (1) and the length (T) of the measuring period.

7. Device according to one of the claims 3 to 6, characterised in that during the measuring period the maximum saw-tooth amplitudes $(U_o)$ are measured respectively on actuation of the reversing device (5), and for the formation of the mean angular distance $(\overline{\phi})$ of the reference positions are supplied to a further memory (6), and that the amplitudes or their difference read off at the beginning and end of the measuring period are divided in a further divider (41) by this mean angular distance.

8. Device according to one of the claims 1 to 6, characterised in that an output (37) for the corrected number of the angular steps covered is provided as a measurement value for the angle of rotation covered.

FIG 1

$$\left(n + \frac{\varphi'_1 - \varphi'_2}{\overline{\Phi}}\right)/T$$

FIG 2

FIG 3

FIG 5

0 059 244

FIG 4

4